# EUROPÄISCHE PATENTSCHRIFT

(11) **EP 3 302 051 B1**
(45) Veröffentlichungstag und Bekanntmachung des Hinweises auf die Patenterteilung: **18.09.2019**
(21) Anmeldenummer: 16724383.1
(22) Anmeldetag: 19.05.2016
(51) Int. Cl.: A01M 7/00, A01M 21/00

(54) **UNKRAUTREGULIERUNGSVORRICHTUNG**
WEED CONTROLLING DEVICE
DISPOSITIF DE RÉGULATION DES ADVENTICES

(30) Priorität: 29.05.2015 DE 102015209891
(43) Veröffentlichungstag der Anmeldung: 11.04.2018
(73) Patentinhaber: Robert Bosch GmbH, 70442 Stuttgart (DE)
(72) Erfinder: BOECK, Simon, 70563 Stuttgart (DE); GLUNK, Christian, 71737 Kirchberg an der Murr (DE); ALBERT, Amos, 71229 Leonberg (DE); MICHAELS, Andreas, 71272 Renningen (DE)
(86) Internationale Anmeldenummer: PCT/EP2016/061184
(87) Internationale Veröffentlichungsnummer: WO 2016/192999

(56) Entgegenhaltungen:
- DE-A1- 4 039 797
- DE-A1-102009 045 434
- GB-A- 2 353 325
- US-A- 5 689 944
- US-A1- 2013 233 940

## Beschreibung

### Stand der Technik

Die Erfindung betrifft eine Vorrichtung, ein System und ein Verfahren zur Beschädigung von Unkraut.

Die Unkrautregulierung in der Landwirtschaft ist eine sehr arbeitsintensive Aufgabe, besonders im biologischen Anbau, der den Einsatz von Chemikalien verbietet oder einschränkt.

Die DE 4039797 A1 offenbart eine Vorrichtung zur Unkrautregulierung, wobei die Beschädigung des Unkrauts mittels eines Flammaktors beschrieben wird.

Die US 2013/0233940 A1 offenbart eine Unkrautregulierungsvorrichtung, welche dazu dient durch Abgabe eines chemischen Mittels Unkraut zu zerstören.

Die US 5,689,944 zeigt eine Unkrautregulierungsvorrichtung, welche ausgebildet ist, mittels eines ununterbrochenen Flüssigkeitsstrahls Unkraut zu beschädigen.

### Offenbarung der Erfindung

Gegenstand der vorliegenden Erfindung ist eine Vorrichtung, ein System und ein Verfahren zur Beschädigung von Unkraut gemäß den Hauptansprüchen. Durch die erfindungsgemäße Vorrichtung und das erfindungsgemäße Verfahren ist es nunmehr möglich, eine äußert schnelle, präzise und damit effiziente Unkrautregulierung vorzunehmen. Die Vorrichtung zeichnet sich hierbei durch einen sehr einfach und robusten Aufbau aus. Dies wird insbesondere dadurch erzielt, dass die erfindungsgemäße Flüssigkeitsabgabeeinheit ein Ventil mit einem Piezoaktor oder einem Elektroaktive-Polymer-Aktor oder einem magnetoresistiven Aktor, d.h. mit einem schnell und genau betätigbaren Aktor aufweist, wodurch die Flüssigkeitsabgabe an das Unkraut auf sehr einfache Art und Weise und sehr präzise gesteuert werden kann. D.h., dass durch gezieltes Öffnen und Schließen des Aktors der Massestrom und die Wirkungszeit der abgegebenen Flüssigkeit genau eingestellt werden können. Bevorzugterweise liegen die Wirkzeiten bzw. Ventilöffnungs-/Schließzeiten in einem Bereich von größer oder gleich 0,1 bis kleiner oder gleich 0,2 ms. Es ist ebenfalls denkbar, dass das Ventil definiert einstellbare Ventilöffnungs-/Schließzeiten aufweist bzw. entsprechend ansteuerbar ist, so dass Ventilöffnungs-/Schließzeiten einstellbar sind. Demnach ist bspw. ein Pulsen möglich, bei dem die Menge der abgegebenen Flüssigkeit pro "Schuss" präzise eingestellt und in die gewünschte Position effektiv eingebracht werden kann, so dass ein unnötiger Flüssigkeitsverbrauch vermieden wird. Folglich kann eine Beschädigung des Unkrauts mit einer sehr geringen Flüssigkeitsmenge und einem kleinen Energiebedarf durchgeführt werden, was zu einer umweltschonenden Unkrautbekämpfung beiträgt.

Da die Flüssigkeitsabgabeeinheit ferner mit einer Druckeinheit verbunden ist, kann die Flüssigkeit impulsförmig unter hohem Druck, d.h. mit einer hohen Austrittsgeschwindigkeit abgegeben werden. Demnach kann die Beschädigung des Unkrauts mechanisch aufgrund der kinetischen Energie der impulsförmig abgegebenen Flüssigkeit ("Wasserstrahlschneiden") erfolgen. Durch diese Maßnahme erfolgt beim Unkrautregulierungsprozess aufgrund der schnellen impulsförmigen Abgabe der Flüssigkeit kaum eine Erdbewegung beim Auftreffen der Flüssigkeit auf das Unkraut, weshalb die Wahrscheinlichkeit für das Aufkeimen weiterer Unkräuter erheblich verringert wird.

Durch das erfindungsgemäße System kann äußerst schnell und präzise eine flächendeckende Unkrautregulierung vorgenommen werden, wobei das System menschlich geführt oder autonom ausgebildet sein kann. Da die Abgabe der Flüssigkeit gezielt und impulsförmig erfolgt, kann vorteilhafterweise auf eine Kompensation der Eigenbewegung des bewegten Systems in Fahrtrichtung (weitestgehend) verzichtet werden, wodurch die Komplexität des Gesamtsystems erheblich reduziert wird oder aber die Fahrgeschwindigkeit erhöht werden.

Die Druckfördereinheit ist ausgebildet die Flüssigkeit unter derart hohem Druck an die Flüssigkeitsabgabeeinheit weiterzuleiten, dass das Unkraut aufgrund der kinetischen Energie der von der Flüssigkeitsabgabe-Einheit impulsförmig abgegebenen Flüssigkeit beschädigbar ist. Hierbei liegt der Druck bevorzugt in einem Bereich von größer oder gleich 500 bar, ferner bevorzugt in einem Bereich von größer oder gleich 500 bar bis kleiner oder gleich 4000 bar. Die Flüssigkeit kann bei der Abgabe vorzugsweise eine Austrittsgeschwindigkeit von größer oder gleich 60 m/s und/oder eine kinetische Energie von größer oder gleich 0,03 J aufweisen. D.h., mit anderen Worten, dass die Flüssigkeit bzw. der gebündelte Flüssigkeitsstrahl, welcher beispielsweise als Wasserstrahl ausgebildet sein kann, eine derart hohe kinetische Energie bei der Abgabe aufweist, dass ein entsprechender mechanischer Zerstörungseffekt bei dem Unkraut, an das er abgegeben wird, hervorgerufen wird. Durch diese Ausgestaltung kann auf sehr einfache und umweltschonende Art und Weise eine Unkrautregulierung erfolgen, wobei auf Chemikalien gänzlich verzichtet werden kann.

Es ist ferner vorteilhaft, wenn die Druckfördereinheit einen Druckspeicher aufweist, welcher ausgebildet ist, eine unter Druck befindliche Flüssigkeit aufzunehmen und an die Flüssigkeitsabgabeeinheit abzugeben. Durch diese Maßnahme ist es nun möglich, die abzugebende Flüssigkeit Unabhängigkeit von der Dauer, der Pulsfrequenz oder Pulsabfolge der Flüssigkeitsabgabe permanent unter hohen Druck gehalten und für die Flüssigkeitsabgabeeinheit zur Verfügung gestellt werden.

Des Weiteren ist es vorteilhaft, wenn die Druckfördereinheit eine Pumpe aufweist, welche ausgebildet ist, die abzugebende Flüssigkeit unter Druck zu setzen und welche ferner fluidisch mit dem Druckspeicher und/oder der Flüssigkeitsabgabeeinheit verbunden ist. Durch die Pumpe kann kontinuierlich Druck in der Druckfördereinheit bzw. im Druckspeicher und in den entsprechenden Leitungen erzeugt werden, so dass die abzugebende Flüssigkeit kontinuierlich unter gleichmäßigem Druck an die Flüssigkeitsabgabeeinheit weitergeleitet und entsprechend an das Unkraut abgegeben werden kann. Des Weiteren ermöglicht diese Ausgestaltung sehr hohe Drücke und damit auch sehr hohe Masseauträge der Flüssigkeit.

Vorteilhaft ist es auch, wenn eine Kammer vorgesehen ist, welche ausgebildet ist, die abzugebende Flüssigkeit aufzunehmen und welche ferner fluidisch mit der Pumpe verbunden ist. Die Kammer ist hierbei bevorzugt austauschbar angeordnet. Durch diese Maßnahme wird eine autarke Vorrichtung bereitgestellt, welche die abzugebende Flüssigkeit mit transportieren und unter Druck setzen kann. Die Kammer kann dann mit der Flüssigkeit neu befüllt oder aber durch eine neue befüllte Kammer ausgetauscht werden. D.h., mit anderen Worten, dass die erfindungsgemäße Unkrautregulierungsvorrichtung als eine Art "Common Rail System" aufgebaut sein kann, durch welches sehr präzise eine Flüssigkeit unter hohem Druck abgegeben werden kann, wodurch eine effiziente und umweltschonende Unkrautregulierung ermöglicht wird.

Vorteilhaft ist es des Weiteren, wenn die Flüssigkeitsabgabeeinheit eine Düse, insbesondere mit einer veränderbaren Düsenöffnung aufweist. Durch diese Ausgestaltung kann zum einen ein stark gebündelter bzw. fokussierter Flüssigkeitsstrahl erzeugt werden, welcher eine hohe kinetische Energie und damit eine hohe Beschädigungswirkung bzw. einen hohen Zerstörungseffekt aufweist. Zum anderen lassen sich jedoch durch Veränderung der Düsenöffnung, d.h. der Form bzw. des Durchlassquerschnitts der Düsenöffnung auch unterschiedliche Ausströmcharakteristiken sowie Größen der Bearbeitungsfläche erzielen. Folglich kann bspw. die Flüssigkeit Mittel zur Wachstumshemmung oder Zerstörung aufweisen, so dass je nach Ausgestaltung der Düsenöffnung eine gezielte Mikroinjektion dieser Mittel an das Unkraut bis zu einer flächigen Besprühung von mehreren Unkräutern mit diesen Mitteln erzielt werden kann. Durch diese Maßnahme kann somit die schädigende Wirkung an dem Unkraut zum einen durch die kinetische Energie der abgegebenen Flüssigkeit oder aber auch zum anderen durch die chemischen Eigenschaften der Flüssigkeit, welche z.B. als Unkrautvernichtungsmittel ausgebildet sein kann, erzielt werden.

Ferner ist es vorteilhaft, wenn die Flüssigkeitsabgabeeinheit eine Vielzahl von Ventilen mit einem Piezoaktor und/oder einem Elektroaktive-Polymer-Aktor und/oder einem Magnetoresistiven-Aktor aufweist. Es ist insbesondere vorteilhaft, wenn die Vielzahl von Ventilen mit dem Piezoaktor und/oder dem Elektroaktive-Polymer-Aktor und/oder dem magnetoresistiven Aktor unabhängig voneinander ansteuerbar sind. Durch diese Maßnahme kann eine sehr große Fläche äußerst präzise behandelt werden. Ferner können mehrere Ventile parallel mit nur einem Druckspeicher verbunden sein, so dass mit sehr einfachen Mittels an allen Ventilen eine unter Druck befindliche Flüssigkeit bereitgestellt und abgegeben werden kann.

Vorteilhaft ist auch ein System mit einer vorangehend beschriebenen erfindungsgemäßen Vorrichtung, welche ferner eine Detektionseinheit aufweist, welche ausgebildet ist, das Unkraut zu detektieren und eine Steuereinheit, welche ausgebildet ist, die Vorrichtung in Abhängigkeit von von der Detektionseinheit ermittelten Daten derart anzusteuern, dass bei einer Betätigung der Vorrichtung eine Abgabe der Flüssigkeit an das Unkraut erfolgt, um dieses zu beschädigen. Demnach kann bei einem derartigen System die Vorrichtung bzw. die Düse mittels bildbasierter Regelung exakt positioniert werden, so dass äußerst schnell und präzise eine (voll-)autonome Unkrautregulierung vorgenommen werden kann. Dies wird u.a. dadurch erzielt, dass - im Abkehr von bekannten Verfahren - nicht die Nutzpflanze, sondern vielmehr das zu bekämpfende Unkraut selbst spezifisch erkannt und gezielt beschädigt wird, wobei die Unkrautregulierungsvorrichtung, d.h. die Düse automatisiert unmittelbar an das Unkraut positioniert wird. Insbesondere in Kulturen mit kleinen Pflanzabständen (z.B. Karotten) ist es durch die vorliegende Erfindung möglich, das unerwünschte Unkraut in unmittelbarer Nähe zur Nutzpflanze in einem sehr frühen Stadium zu beschädigen bzw. abzutöten.

### Zeichnungen

Die Erfindung wird nachstehend anhand der beigefügten Zeichnungen beispielhaft näher erläutert. Es zeigen:
- Figur 1: eine schematische Darstellung einer erfindungsgemäßen Unkrautregulierungsvorrichtung;
- Figur 2: eine schematische Darstellung einer weiteren Ausgestaltung der erfindungsgemäßen Unkrautregulierungsvorrichtung mit einer Vielzahl von Ventilen; und
- Figur 3: eine schematische Darstellung eines erfindungsgemäßen Systems aufweisend die erfindungsgemäße Unkrautregulierungsvorrichtung gemäß Fig. 1.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

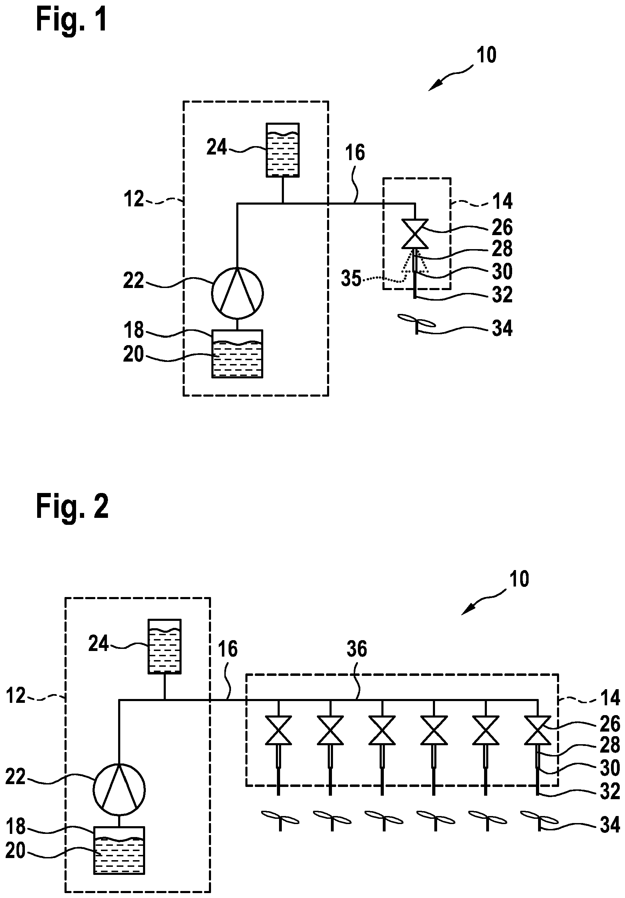

In Fig. 1 ist eine erfindungsgemäße Vorrichtung zur Beschädigung von Unkraut dargestellt, welche in ihrer Gesamtheit mit der Bezugsziffer 10 versehen ist.

Die Unkrautregulierungsvorrichtung 10 weist eine Druckfördereinheit 12 und eine Flüssigkeitsabgabeeinheit 14 auf. Die Druckfördereinheit 12 und die Flüssigkeitsabgabeeinheit 14 sind über eine Druckleitung 16 fluidisch miteinander verbunden.

Die Druckfördereinheit 12 weist eine Kammer 18 auf, in der eine abzugebende Flüssigkeit 20 angeordnet ist. Die Druckfördereinheit 12 weist ferner eine Pumpe 22 auf, welche über eine Leitung fluidisch mit der Kammer 18 verbunden ist. Des Weiteren weist die Druckfördereinheit 12 einen Druckspeicher 24 auf. Der Druckspeicher 24 ist ebenfalls über die Druckleitung 16 mit der Pumpe 22 fluidisch verbunden. Die Pumpe 22 ist ausgebildet die in der Kammer 18 befindliche Flüssigkeit 20 unter Druck zu setzen und in der Druckleitung 16 bereit zu stellen bzw. an den Druckspeicher 24 abzugeben. Der Druckspeicher 24 ist wiederum ausgebildet die unter Druck befindliche Flüssigkeit 20 permanent und gleichmäßig über die Druckleitung 16 an die Flüssigkeitsabgabeeinheit 14 weiterzuleiten. Demnach kann mittels der Druckfördereinheit 12 die Flüssigkeit 20 unter Druck gesetzt, gespeichert und für die Flüssigkeitsabgabeeinheit 14 bereitgestellt werden. Die Flüssigkeit 20 ist hierbei Wasser, kann aber je nach Anwendung bspw. auch ein Unkrautvernichtungsmittel sein oder aufweisen.

Die Flüssigkeitsabgabeeinheit 14 weist ein Ventil 26 auf. Erfindungsgemäß weist das Ventil 26 vorliegend einen Piezoaktor auf. Alternativ kann das Ventil 26 auch einen Elektroaktive-Polymer-Aktor und/oder einen Magnetoresistiven-Aktor aufweisen. Die Flüssigkeitsabgabeeinheit 14 weist ferner eine Düse 28 mit einer veränderbaren Düsenöffnung 30 auf. Demnach kann durch Betätigung des Ventils 26 mittels des Piezoaktors eine bestimmte Menge der unter Druck befindlicher Flüssigkeit 20 gezielt und präzise abgegeben werden, um damit bspw. einen fokussierten bzw. gebündelten Flüssigkeitsstrahl 32 mit kinetischer Energie zur Beschädigung eines Unkrauts 34 erzeugt werden ("Wasserstrahlschneiden"). Durch das gezielte Öffnen und Schließen des Ventils 26 können der Massestrom und die Wirkungszeit eingestellt werden und damit die Flüssigkeitsabgabe sehr präzise gesteuert werden. Ferner ist ein Pulsen möglich, wodurch aufgrund der gezielten, bevorzugt kurzzeitigen Flüssigkeitsabgabe der Flüssigkeitsverbrauch erheblich reduziert werden kann.

Da die Düse 28 eine veränderbare Düsenöffnung 30 aufweist, d.h. die Düsenöffnung 30 variabel ausgebildet ist, lassen sich unterschiedliche Ausströmcharakteristiken 35 sowie Größen der Bearbeitungsfläche erzielen. Wie durch die gestrichelte Linie in Fig. 1 angedeutet, lässt sich somit ein konischer Flüssigkeitsstrahl 32 erzeugen, durch den das Unkraut 34 flächig besprüht werden kann. Die schädigende Wirkung ist hierbei nicht die kinetische Energie der ausströmenden Flüssigkeit 20 bzw. des Flüssigkeitsstrahls 32, sondern die (chemische) Eigenschaft der Flüssigkeit 20 an sich. Demzufolge kann die Flüssigkeit 20 beispielsweise als Unkrautvernichtungsmittel ausgebildet sein. Auch in dieser Ausgestaltung besteht jedoch der große Vorteil, dass nur eine definierte Menge von der Flüssigkeit abgegeben wird, welche in die gewünschte Position bzw. über die gewünschte Bearbeitungsfläche effektiv eingebracht wird, so dass ein unnötiger Flüssigkeitsverbrauch vermieden wird.

In Fig. 2 ist eine weitere Ausführung der Unkrautregulierungsvorrichtung 10 gezeigt, welche eine Vielzahl von Ventilen 26 aufweist. Jedes der Ventile 26 weist hierbei einen Piezoaktor auf. Die Ventile 26 können jedoch auch, ohne den Rahmen der Erfindung zu verlassen, unterschiedliche Aktoren aus der Gruppe bestehend aus einem Piezoaktor, einem Elektroaktive-Polymer-Aktor und einem Magnetoresistiven-Aktor aufweisen. Die Ventile 26 sind hierbei über eine gemeinsame Druckleitung 36 parallel mit der Druckfördereinheit 12 verbunden. Auch in dieser Ausgestaltung ist es denkbar, anstatt die kinetische Energie der Flüssigkeit 20 für die Beschädigung des Unkrauts 34 zu nutzen, die Düsen 28 mit der veränderbaren Düsenöffnung derart einzustellen, dass ein konischer Flüssigkeitsstrahl abgegeben wird.

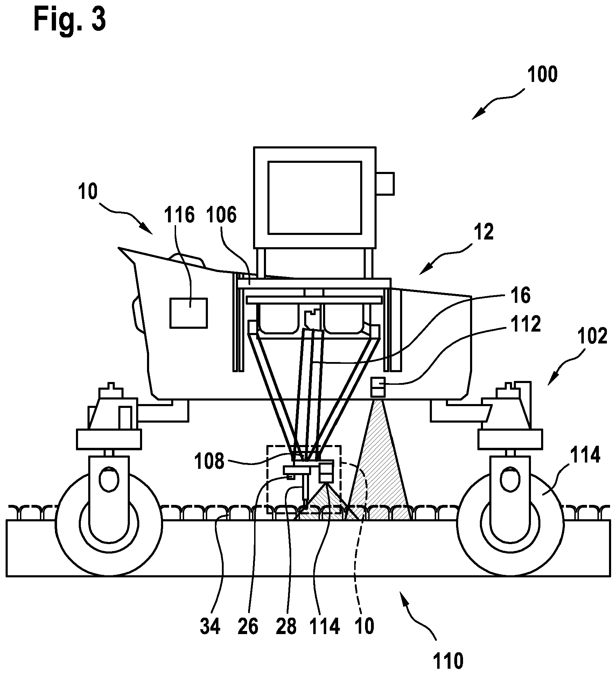

In Fig. 3 ist ein erfindungsgemäßes System zur Beschädigung von Unkraut 34 dargestellt, welches in seiner Gesamtheit mit der Bezugsziffer 100 versehen ist.

Das System 100 weist eine erfindungsgemäße Unkrautregulierungsvorrichtung 10 bzw. eine Vorrichtung 10 zur Beschädigung von Unkraut 34 gemäß der vorangehend beschriebenen Ausführungsform aus Fig. 1 auf. Es ist jedoch eine beliebige andere Ausführungsform der erfindungsgemäßen Unkrautregulierungsvorrichtung 10 an dem System 100 denkbar. Das System 100 ist als mobile Plattform ausgebildet. Hierfür weist das System 100 eine Antriebseinheit 102 mit Rädern 104 auf. Es ist jedoch jegliche, dem Fachmann bekannte Antriebsart denkbar, welche dem System 100 eine Mobilität verschaffen kann.

Das System 100 weist ferner eine Manipulatoreinheit 106 auf, an deren unterem Manipulatorabschnitt 108 die Vorrichtung 10 angeordnet ist. Wie vorangehend erläutert, weist die Vorrichtung 10 erfindungsgemäß die Flüssigkeitsabgabeeinheit 14 mit der Düse 28 auf. Die Düse 28 ist hierbei zwischen der Manipulatoreinheit 106 und dem Boden angeordnet und weist in Richtung des Unkrauts 34. Um nun eine bildbasierte Regelung zur exakten Positionierung der Vorrichtung 10 bzw. der Düse 28 zu ermöglichen, weist das System 100 ferner eine Detektionseinheit 110 und eine Steuereinheit 116 auf. Die Detektionseinheit 110 weist eine Klassifizierungseinheit 112 und eine Lokalisierungseinheit 114 auf.

Hierbei ist die Klassifizierungseinheit 112 als bildgebendes System in Form einer Kameraeinheit 112 ausgeführt. Die Lokalisierungseinheit 114 ist als Visual-Servoing-Kamera 114 ausgeführt und dem unteren Manipulatorabschnitt 108 der Manipulatoreinheit 106 neben der Düse 28 angeordnet. Demzufolge ist die Visual-Servoing-Kamera 114 über dem Boden "schwebend" angeordnet und wird dementsprechend zusammen mit der Düse 28 bewegt bzw. positioniert. Durch diese Anordnung kann die Lokalisierungseinheit 114 bzw. die Visual-Servoing-Kamera 114 in unmittelbarer Nähe zu dem Unkraut 34 äußerst präzise die Relativpositionen der Düse 28 zu dem Unkraut 18 ermittelt. Die Lokalisierungseinheit 114 ermittelt basierend auf den Positionsdaten bzw. den Erkennungsdaten der Klassifizierungseinheit 114 die Relativposition, vorzugsweise mittels einer (nicht gezeigten) Rechnereinheit.

Ohne den Rahmen der vorliegenden Erfindung zu verlassen, ist es jedoch durchaus auch denkbar, dass die Klassifizierungseinheit 112 und die Lokalisierungseinheit 114 als eine Einheit ausgebildet sind. Demnach würde die Einheit 112, 114 umfassend die Klassifizierungseinheit 112 und die Lokalisierungseinheit 114 eine Doppelaufgabe erfüllen, nämlich die vorangehend beschriebene Klassifikationsaufgabe (Erkennung des Unkrauts 34) und die Ermittlung der Relativpositionen der Düse 28 zu dem Unkraut 34 (visual servoing), welche zur Führung der Düse 28 dient.

Die Steuereinheit 116 empfängt die ermittelten Daten der Detektionseinheit 110 bzw. der Lokalisierungseinheit 114 und steuert entsprechend die Manipulatoreinheit 106 und die Unkrautregulierungsvorrichtung 10 so an, dass die Düse 28 in eine entsprechende Position gebracht und die Flüssigkeit 20 zu einem bestimmten Zeitpunkt bzw. bei Erreichen einer bestimmten Position für eine gewünschte Dauer an das Unkraut 34 abgegeben wird, um dieses zu beschädigen.

## Patentansprüche

1. Unkrautregulierungsvorrichtung zur Beschädigung von Unkraut (34) mit einer Druckfördereinheit (12), welche ausgebildet ist, eine Flüssigkeit (20) unter Druck weiterzuleiten, und einer Flüssigkeitsabgabeeinheit (14), welche fluidisch mit der Druckfördereinheit (12) verbunden ist und ferner ausgebildet ist, die unter Druck befindliche Flüssigkeit (20) an das Unkraut (34) impulsförmig unter hohem Druck abzugeben, um dieses zu beschädigen, wobei die Flüssigkeitsabgabeeinheit (14) zumindest ein Ventil (26) mit einem Piezoaktor oder einem Elektroaktive-Polymer-Aktor oder einem magnetoresistiven Aktor aufweist, **dadurch gekennzeichnet, dass** die Druckfördereinheit (12) ausgebildet ist, die Flüssigkeit (20) unter derart hohem Druck an die Flüssigkeitsabgabeeinheit (14) weiterzuleiten, dass das Unkraut (34) aufgrund der kinetischen Energie der von der Flüssigkeitsabgabeeinheit (14) impulsförmig abgegebenen Flüssigkeit (20) beschädigbar ist.

2. Vorrichtung (10) nach Anspruch 1, **dadurch gekennzeichnet, dass** die Flüssigkeit (20) bei der Abgabe von der Flüssigkeitsabgabeeinheit (14) eine Austrittsgeschwindigkeit von größer oder gleich 60 m/s und eine kinetische Energie von größer oder gleich 0,03 J aufweist.

3. Vorrichtung (10) nach einem der vorhergehenden Ansprüche, **dadurch gekennzeichnet, dass** die Druckfördereinheit (12) einen Druckspeicher (24) aufweist, welcher ausgebildet ist, eine unter Druck befindliche Flüssigkeit (20) aufzunehmen und an die Flüssigkeitsabgabeeinheit (14) abzugeben.

4. Vorrichtung (10) nach Anspruch 3, **dadurch gekennzeichnet, dass** die Druckfördereinheit (12) eine Pumpe (22) aufweist, welche ausgebildet ist, die abzugebende Flüssigkeit (20) unter Druck zu setzen und welche ferner fluidisch mit dem Druckspeicher (24) und/oder der Flüssigkeitsabgabeeinheit (14) verbunden ist.

5. Vorrichtung (10) nach Anspruch 4, **dadurch gekennzeichnet, dass** eine Kammer (18) vorgesehen ist, welche ausgebildet ist, die abzugebende Flüssigkeit (20) aufzunehmen und welche ferner fluidisch mit der Pumpe (22) verbunden ist.

6. Vorrichtung (10) nach einem der vorhergehenden Ansprüche, **dadurch gekennzeichnet, dass** die Flüssigkeitsabgabeeinheit (14) eine Düse (28), insbesondere mit einer veränderbaren Düsenöffnung (30) aufweist.

7. Vorrichtung (10) nach einem der vorhergehenden Ansprüche, **dadurch gekennzeichnet, dass** die Flüssigkeitsabgabeeinheit (14) eine Vielzahl von Ventilen (26) mit einem Piezoaktor und/oder einem Elektroaktive-Polymer-Aktor und/oder einem magnetoresistiven Aktor aufweist.

8. Vorrichtung (10) nach Anspruch 7, **dadurch gekennzeichnet, dass** die Vielzahl von Ventilen (26) mit dem Piezoaktor und/oder dem Elektroaktive-Polymer-Aktor und/oder dem magnetoresistiven Aktor unabhängig voneinander ansteuerbar sind.

9. System (100) zur Beschädigung von Unkraut (34) mit einer Vorrichtung (10) zur Beschädigung von Unkraut (34) nach einem der vorhergehenden Ansprüche.

10. System (100) nach Anspruch 9, **gekennzeichnet durch** eine Detektionseinheit (110), welche ausgebildet ist, das Unkraut (34) zu detektieren, und eine Steuereinheit (116), welche ausgebildet ist, die Vorrichtung (10) in Abhängigkeit von von der Detektionseinheit (110) ermittelten Daten derart anzusteuern, dass bei einer Betätigung der Vorrichtung (10) eine Abgabe der Flüssigkeit (20) an das Unkraut (34) erfolgt, um dieses zu beschädigen.

11. Verfahren zur Beschädigung von Unkraut (34) mit folgenden Schritten:
- Bereitstellen einer Druckfördereinheit (12), welche ausgebildet ist, eine Flüssigkeit (20) unter derart hohen Druck an eine Flüssigkeitsabgabeeinheit (14) weiterzuleiten, dass das Unkraut (34) aufgrund der kinetischen Energie der von der Flüssigkeitsabgabeeinheit (14) abgegebenen Flüssigkeit (20) beschädigbar ist, und
- impulsförmiges Abgeben der unter Druck befindlichen Flüssigkeit (20) an das Unkraut (34) mittels der Flüssigkeitsabgabeeinheit (14) aufweisend ein Ventil (26) mit einem Piezoaktor oder einem Elektroaktive-Polymer-Aktor oder einem magnetoresistiven Aktor, wobei das Unkraut (34) aufgrund der kinetischen Energie der von der Flüssigkeitsabgabeeinheit (14) impulsförmig abgegebenen Flüssigkeit (20) beschädigt wird.

## Claims

1. Weed control device for damaging weeds (34), having a pressure conveyor unit (12) which is designed to pass on a liquid (20) under pressure, and having a liquid-dispensing unit (14) which is fluidically connected to the pressure conveyor unit (12) and is furthermore designed to dispense the pressurized liquid (20) onto the weeds (34) under high pressure in a pulsed manner in order to damage said weeds, wherein the liquid-dispensing unit (14) has at least one valve (26) with a piezo actuator or an electroactive polymer actuator or a magnetoresistive actuator, **characterized in that** the pressure conveyor unit (12) is designed to pass the liquid (20) on to the liquid-dispensing unit (14) under such high pressure that the weeds (34) are able to be damaged on account of the kinetic energy of the liquid (20) dispensed in a pulsed manner by the liquid-dispensing unit (14).

2. Device (10) according to Claim 1, **characterized in that**, when dispensed by the liquid-dispensing unit (14), the liquid (20) has an exit speed of greater than or equal to 60 m/s and a kinetic energy of greater than or equal to 0.03 J.

3. Device (10) according to either of the preceding claims, **characterized in that** the pressure conveyor unit (12) has a pressure accumulator (24) which is designed to receive, and to deliver to the liquid-dispensing unit (14), a pressurized liquid (20).

4. Device (10) according to Claim 3, **characterized in that** the pressure conveyor unit (12) has a pump (22) which is designed to pressurize the liquid (20) to be dispensed and which is furthermore fluidically connected to the pressure accumulator (24) and/or to the liquid-dispensing unit (14).

5. Device (10) according to Claim 4, **characterized in that** provision is made of a chamber (18) which is designed to receive the liquid (20) to be dispensed and which is furthermore fluidically connected to the pump (22).

6. Device (10) according to one of the preceding claims, **characterized in that** the liquid-dispensing unit (14) has a nozzle (28), in particular with a variable nozzle opening (30).

7. Device (10) according to one of the preceding claims, **characterized in that** the liquid-dispensing unit (14) has a multiplicity of valves (26) with a piezo actuator and/or an electroactive polymer actuator and/or a magnetoresistive actuator.

8. Device (10) according to Claim 7, **characterized in that** mutually independent activation of the multiplicity of valves (26) with the piezo actuator and/or the electroactive polymer actuator and/or the magnetoresistive actuator is able to be realized.

9. System (100) for damaging weeds (34), having a device (10) for damaging weeds (34) according to one of the preceding claims.

10. System (100) according to Claim 9, **characterized by** a detection unit (110) which is designed to detect the weeds (34), and by a control unit (116) which is designed to activate the device (10), in a manner dependent on data determined by the detection unit (110), such that, when the device (10) is actuated, the liquid (20) is dispensed onto the weeds (34) in order to damage them.

11. Method for damaging weeds (34), having the following steps:
- providing a pressure conveyor unit (12) which is designed to pass a liquid (20) on to a liquid-dispensing unit (14) under such high pressure that the weeds (34) are able to be damaged on account of the kinetic energy of the liquid (20) dispensed by the liquid-dispensing unit (14), and
- dispensing the pressurized liquid (20) onto the weeds (34) in a pulsed manner by means of the liquid-dispensing unit (14), which has a valve (26) with a piezo actuator or an electroactive polymer actuator or a magnetoresistive actuator, wherein the weeds (34) are damaged on account of the kinetic energy of the liquid (20) dispensed in a pulsed manner by the liquid-dispensing unit (14) .

## Revendications

1. Dispositif de régulation des adventices, destiné à détériorer des adventices (34), pourvu d'une unité de transport par pression (12), laquelle est conçue pour transmettre par pression un liquide (20) et d'une unité distributrice de liquide (14), laquelle est fluidiquement reliée avec l'unité de transport par pression (12) et est conçue par ailleurs pour distribuer par impulsions, sous haute pression le liquide (20) sous pression aux adventices (34), pour les détériorer, l'unité distributrice de liquide (14) comportant au moins une soupape (26) dotée d'un actionneur piézo-électrique ou d'un actionneur polymère électro-actif ou d'un actionneur magnéto-résistif, **caractérisé en ce que** l'unité de transport par pression (12) est conçue pour transmettre le liquide (20) à l'unité distributrice de liquide (14) sous une pression haute dans une mesure telle qu'en raison de l'énergie cinétique du liquide (20) distribué par impulsions par l'unité distributrice de liquide (14), les adventices (34) soient détériorables.

2. Dispositif (10) selon la revendication 1, **caractérisé en ce que** lors de la distribution par l'unité distributrice de liquide (14), le liquide (20) fait preuve d'une vitesse de sortie supérieure ou égale à 60 m/s et d'une énergie cinétique supérieure ou égale à 0,03 J.

3. Dispositif (10) selon l'une quelconque des revendications précédentes, **caractérisé en ce que** l'unité de transport par pression (12) comporte un accumulateur de pression (24) lequel est conçu pour recevoir un liquide (20) sous pression et pour le distribuer à l'unité distributrice de liquide (14).

4. Dispositif (10) selon la revendication 3, **caractérisé en ce que** l'unité de transport par pression (12) comporte une pompe (22), laquelle est conçue pour mettre sous pression le liquide (20) qui doit être distribué et laquelle est par ailleurs fluidiquement reliée avec l'accumulateur de pression (24) et/ou l'unité distributrice de liquide (14).

5. Dispositif (10) selon la revendication 4, **caractérisé en ce qu'**il est prévu un compartiment (18), lequel est conçu pour recevoir le liquide (20) qui doit être distribué et lequel est par ailleurs fluidiquement relié avec la pompe (22).

6. Dispositif (10) selon l'une quelconque des revendications précédentes, **caractérisé en ce que** l'unité distributrice de liquide (14) comporte une buse (28), dotée notamment d'un orifice de buse (30) variable.

7. Dispositif (10) selon l'une quelconque des revendications précédentes, **caractérisé en ce que** l'unité distributrice de liquide (14) comporte une pluralité de soupapes (26), dotées d'un actionneur piézo-électrique ou d'un actionneur polymère électro-actif ou d'un actionneur magnéto-résistif.

8. Dispositif (10) selon la revendication 7, **caractérisé en ce que** la pluralité de soupapes (26), dotées d'un actionneur piézo-électrique ou d'un actionneur polymère électro-actif ou d'un actionneur magnéto-résistif sont activables indépendamment les unes des autres.

9. Système (100), de détérioration des adventices (34) pourvu d'un dispositif (10), destiné à détériorer des adventices (34) selon l'une quelconque des revendications précédentes.

10. Système (100) selon la revendication 9, **caractérisé par** une unité de détection (110), laquelle est conçue pour détecter les adventices (34), et par une unité de commande (116), laquelle est conçue pour activer le dispositif (10) en fonction de données recherchées par l'unité de détection (110) de telle sorte, que lors d'un actionnement du dispositif (10), il s'effectue une distribution du liquide (20) aux adventices (34), pour les détériorer.

11. Procédé, destiné à détériorer des adventices (34), comprenant les étapes suivantes consistant à :
- mettre à disposition une unité de transport par pression (12), laquelle est conçue pour transmettre un liquide (20) à une unité distributrice de liquide (14) sous une pression haute dans une mesure telle qu'en raison de l'énergie cinétique du liquide (20) distribué par l'unité distributrice de liquide (14), les adventices (34) soient détériorables, et
- distribuer par impulsions le liquide (20) sous pression aux adventices (34) au moyen de l'unité distributrice de liquide (14) comportant une soupape (26) dotée d'un actionneur piézo-électrique ou d'un actionneur polymère électro-actif ou d'un actionneur magnéto-résistif, les adventices (34) étant détériorées en raison de l'énergie cinétique du liquide (20) distribué par impulsions par l'unité distributrice de liquide (14).
